# EUROPEAN PATENT APPLICATION

(11) **EP 2 703 857 A1**
(43) Date of publication of application: **05.03.2014**
(21) Application number: 12460068.5
(22) Date of filing: 13.09.2012
(51) Int. Cl.: G02B 6/255

(54) **Method for fusion splicing of optical fibres**

(30) Priority: 03.09.2012 PL 40063612
(71) Applicant: P.H. Elmat Sp. z o.o., 35-205 Rzeszow (PL)
(72) Inventor: Pawlik, Katarzyna, 03-126 Warszawa (PL); Jaroszewicz, Leszek Roman, 01-496 Warszawa (PL); Nasilowski, Tomasz, 00-124 Warszawa (PL); Dlubek, Michal, 35-506 Rzeszow (PL); Kalisz, Rafal, 35-120 Rzeszow (PL); Kalisz, Jan, 35-120 Rzeszow (PL); Murawski, Michal, 03-341 Warszawa (PL); Szymanski, Michal, 03-910 Warszawa (PL); Ostrowski, Lukasz, 05-126 Nieporet (PL)
(74) Representative: Piotrowicz, Alicja

(57) **Abstract**

The invention relates to a method for fusion splicing of optical fibres involving arranging, aligning, axial positioning of the optical fibres towards each other and then heating and contacting the opposite ends of the optical fibres being joined. The method is characterised in that optical fibres of various material types with various melting temperatures being joined with each other, where the end of the optical fibre being joined, with a higher melting temperature, is heated to a temperature above the melting temperature of the optical fibre with a lower melting temperature. At the same time, none of the optical fibres are heated to a temperature exceeding its own melting temperature. The optical fibre connecting ends, initially separated from each other by a strictly defined distance, are then moved towards each other at a strictly defined rate and at a strictly defined distance and pressed against each other until the fibres are thermally integrated.

## Description

The invention relates to a method of fusion splicing of optical fibres.

The invention is applicable to the optical fibre manufacturing industry, telecommunication and all technologies and techniques using optical fibres.

Various methods for fusion splicing of optical fibres are known in the art.

A publication by D. Glodge et al. "Optical fiber Telecommunications - Fiber Splicing" Ed. C.M. Millelr and A.G. Chgnoweth, New York: Academic, 1979 discloses a thermal method for splicing of optical fibres made of glass fibre, thus of a single type, wherein properly cut ends of optical fibres are heated in an arc or in a flame until the faces being heated are plasticised, and then they are centrically pressed against each other and thus joined.

Patent application EP 1 376 172 discloses a connecting method of different kinds of optical fibres, wherein the different kinds of optical fibers have different mode field diameters. The known method consists of the end faces of the optical fibres being joined are placed in contact with each other after removing of their external coatings and proper cutting, and then the joined ends are heated, properly matching various diameters of the mode areas of the individual optical fibres, while the heating is carried out in a low dust space having a clean degree of 1000 or less in class. Thus, an occurrence of cracks caused by the burning of foreign materials in the joined zones of the optical fibre is limited. Moreover, after fusion splicing of the optical fibres, the joined parts of the optical fibres' surfaces are covered with a protective layer and subjected to an etching process in order to remove roughness and fissures and finally they are subjected to splice strength tests.

However, the described methods of the prior art relate to the splicing of optical fibres of the same type, made of the same materials, and when they relate to the splicing of optical fibres of different types, the variety is limited to diversified diameters of the mode area.

Nevertheless, lately a need for splicing of optical fibres of various types has emerged, where the above-mentioned fibres are made of various material types, e.g. glass or polymers. There are no examples in the prior art of splicing of optical fibres of such a type with a diversified type of fibre material, e.g. splicing of polymer optical fibres with glass optical fibres. All attempts to join such optical fibres were unsuccessful with disadvantageous results. The method according to the invention eliminates this technical problem.

The method for fusion splicing of optical fibres, involving arranging, aligning, axial positioning of the optical fibres towards each other, and then heating and connecting the opposite ends of the optical fibres being joined, according to the invention, is characterised in that optical fibres made of various material types are joined, with various melting temperatures, wherein the end of the optical fibre being joined with a higher melting temperature is heated to a temperature above the melting temperature of the optical fibre with a lower melting temperature, while each of the optical fibres being joined cannot be heated to a temperature higher than its own melting temperature; the optical fibre connecting ends, initially separated from each other by a strictly defined distance, are then moved towards each other at a strictly defined rate and at a strictly defined distance and pressed against each other until the fibres are thermally integrated.

Preferably, in the method according to the invention the types of the optical fibres being joined include glass optical fibre, with a melting temperature in the range of 1800-2000°C, and polymer optical fibre, with a melting temperature in the range of 100-400°C. Most preferably, the polymer optical fibre includes optical fibre made of fibres based on perfluoro polymer, or of fibres based on cyclic polyolefins, or based on poly(methyl methacrylate) (PMMA) and other polymers.

Preferably, in the method according to the invention the end of the optical fibre being joined, with a higher melting temperature, is heated to a temperature of 50 to 250ºC higher than the melting temperature of the optical fibre with a lower melting temperature.

Preferably, in the method according to the invention the initial distance between the optical fibre connecting ends is positive or negative and ranges from -20 to +50 µm, and the optical fibre ends are moved towards each other at a rate ranging from 10 to 50 µm/s, most preferably at a rate ranging from 20 to 40 µm/s, and at a distance ranging from 10 to 100 µm.

Another method for fusion splicing of optical fibres, involving arranging, aligning, axial positioning of the optical fibres towards each other and then heating and connecting the opposite ends of the optical fibres being joined, in an alternative embodiment according to the invention, is characterised by the optical fibres of various material types with various melting temperatures being joined with each other; the end of the optical fibre being joined, with a higher melting temperature, is heated to a temperature above the melting temperature of the optical fibre with a lower melting temperature and at the same time below its own melting temperature, while the end of the optical fibre with a lower melting temperature is heated to a temperature close to, but not exceeding, its melting own temperature; the optical fibre connecting ends, initially separated from each other by a strictly defined distance, are then moved towards each other at a strictly defined rate and at a strictly defined distance and pressed against each other until the fibres are thermally integrated.

Preferably, in another method according to the invention the types of the optical fibres being joined include glass optical fibre with a melting temperature in the range of 1800-2000°C and polymer optical fibre with a melting temperature in the range of 100-400°C. Most preferably, the polymer optical fibre includes optical fibre made of fibres based on perfluoro polymer, or of fibres based on cyclic polyolefins, or based on poly(methyl methacrylate) (PMMA) and other polymers.

Preferably, in another method according to the invention the end of the optical fibre being joined, with a higher melting temperature, is heated to a temperature by 50 to 250ºC higher than the melting temperature of the optical fibre with a lower melting temperature.

Preferably, in another method according to the invention the initial distance between the optical fibre connecting ends is positive or negative and ranges from -20 to +50 µm, and the optical fibre ends are moved towards each other at a rate ranging from 10 to 50 µm/s, most preferably at a rate ranging from 20 to 40 µm/s, and at a distance ranging from 10 to 100 µm.

The method according to the invention is advantageous in that it allows for the joining of optical fibres made of various material types, i.e. glass and polymer materials. Moreover, using the method according to the invention, durable and robust splicing is obtained.

The term "negative distance" used in the description is to be understood as a distance by which the glass optical fibre pressed against the polymer optical fibre would move if the polymer optical fibre were removed.

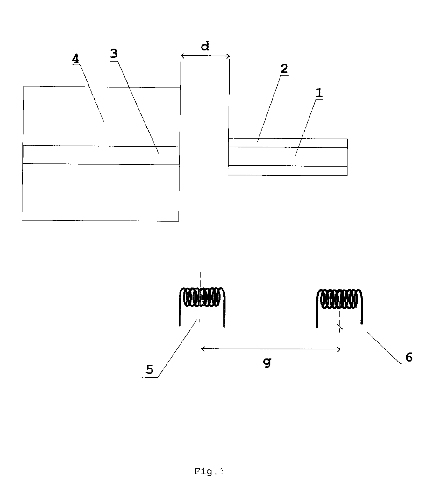

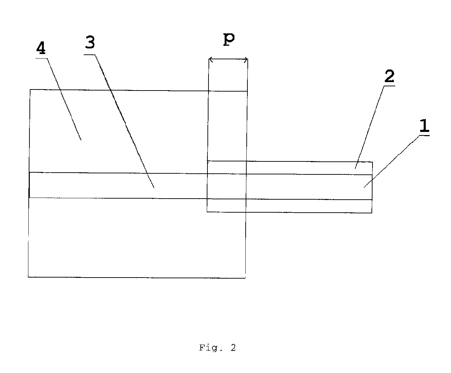

The invention will now be explained, in detail based on the following embodiments and the appended drawings, among which Fig. 1 is a diagram of the optical fibres being joined in an arrangement just before they are heated, and Fig. 2 is a diagram of joined optical fibres.

### Example 1

For the splicing, two sections of optical fibres were used, one of which was a glass optical fibre, the other one - a polymer optical fibre. The glass optical fibre was a commercial multimode standard glass fibre of the Corning®62.5/125 type, made of *high silica* glass, with a core diameter of **(1)** ϕ = 62.5 µm and cladding diameter of (2) ϕ = 125 µm, and the cladding of the optical fibre was made of undoped high silica glass, while the core - of Ge-doped high silica glass. On the other hand, the second optical fibre was a commercial polymer optical fibre of the Thorlabs GIPOF62 type with a core diameter of (3) ϕ = 62.5 µm and cladding diameter of (4) ϕ = 490 µm, and it was made of CYTOP® type polymer, being a material based on fluorinated poly(methyl methacrylate) (PMMA). The melting temperature of the glass optical fibre was about 1800°C, and the melting temperature of the polymer optical fibre was below 200°C (about 150°C). The optical fibres for splicing were prepared in the following way: the protective fibre jacket was removed from the end of the glass fibre using a mechanical stripper; the end was then cleaned using tissue paper saturated with isopropyl alcohol. The polymer fibre was prepared by wiping with a dust-free cloth using a fast and smooth movement along its axis. Both optical fibres were then cut so that the surface of the optical fibre's face was perpendicular to its axis. The optical fibres prepared in this method were placed in the holders of a splicer so that the faces of the connecting ends were opposite each other at an initial distance of d = 8 µm and were positioned axially for the maximum amount of light to be transmitted from one fibre to the other. After positioning and aligning of the fibres towards each other, the heating process was started. The heating was carried out using a Vytran GPX-3400 filament splicer, and the heating method was as follows:

In the first heating step, the source of heat (5) of the splicer was moved away from the polymer fibre towards the glass fibre to a distance of (g) = 3.15 mm so that the polymer fibre was not heated at all or only to a minimal degree, while only the glass fibre was heated. The glass fibre was heated with the moved heat source (6) to a temperature of about 300°C, which is therefore higher than the melting temperature of the polymer fibre. After reaching this temperature, which lasted about 5 seconds, the glass fibre was moved towards the polymer fibre at a rate of about 30 µm/s by about 60 µm. During this time, the glass fibre heated above the melting temperature of the polymer partially melted the structure of the polymer fibre and entered inside the polymer axially, leading to a splicing between the glass and polymer, where the polymer "stuck" to the glass.

After splicing, the splice was protected from possible damage and the influence of external conditions using standard commercially available heat shrink splice casings. Pre-cut metal or glass tubes with a diameter larger than that of the polymer fibre, glued at the ends with a glue that does not impose too much stress onto the fibres and the splice, may also be used.

Any optical loss on the splice made in this example amounted to 3 dB on average.

### Example 2

In this example, TOPAS optical fibre made of polymer material based on cyclic polyolefins was used for splicing instead of the CYTOP optical fibre, and it was prepared in the same way as in Example 1. Differences in the splicing procedure consisted of the fact that the initial distance between the ends of optical fibres was set to (d) = 10 µm; the splicer's heat source was then moved away from the polymer fibre to a distance of (g) about 0.3 mm towards the glass fibre, and at the same time, the polymer fibre was heated to a temperature of about 80°C (considering the significantly smaller shift distance of the heat source of (g) about 0.3 mm in comparison to Example 1, where (g) amounted to about 3.15 mm) while the glass fibre was heated to a temperature of about 250°C. The glass fibre was then moved towards the polymer fibre at a rate of about 40 µm/s by about 70 µm until the integration of glass and polymer was obtained.

After splicing, the splice was protected in the same way as in Example 1.

Any optical loss on the splice made in this example amounted to 4.5 dB on average.

### Example 3

In this example, PMMA optical fibre made of polymer material based on poly(methyl methacrylate) was used for splicing instead of the CYTOP optical fibre, and it was prepared in the same way as in Example 1; however, the positioning, heating and splicing process itself was carried out in the following manner:

The optical fibres being joined were positioned axially towards each other and moved towards each other so that their faces made contact. The splicer holder with the glass optical fibre was then moved towards the polymer optical fibre, causing one of the optical fibres to exert such a pressure onto the other one that after removal of the polymer optical fibre, the end of glass optical fibre would shift by 10 µm. In such a position, the optical fibres are positioned at a negative initial distance of d = -10 µm. After such arrangement and aligning, the glass fibre was heated to a temperature of about 250°C, in the meantime, moving the fibre towards the polymer fibre at rate of about 35 µm/s by about 50 µm until splicing was obtained.

After splicing, the splice was protected in the same way as in Example 1.

Any optical loss on the splice made in this example amounted to 5.2 dB on average.

Due to the use of the method according to the invention, the polymer fibre does not deform during the splicing process.

It is obvious that particular embodiments of the method for fusion splicing of optical fibres according to the invention presented in the description cannot be interpreted as limited solely to the enclosed examples.

## Claims

1. Method for fusion splicing of optical fibres, involving arranging, aligning, axial positioning of the optical fibres towards each other, and then heating and contacting the opposite ends of the optical fibres being joined, **characterised in that** optical fibres of various material types with various melting temperatures being joined with each other, where the end of the optical fibre being joined with a higher melting temperature, is heated to a temperature above the melting temperature of the optical fibre with a lower melting temperature; at the same time, none of the optical fibres are heated to a temperature exceeding its own melting temperature; the optical fibre connecting ends, initially separated from each other by a strictly defined distance, are then moved towards each other at a strictly defined rate and at a strictly defined distance and pressed against each other until the fibres are thermally integrated.

2. The method according to claim 1, **characterised in that** the types of the optical fibres being joined include glass optical fibre with a melting temperature in the range of 1800-2000°C, and polymer optical fibre with a melting temperature in the range of 100-400°C.

3. The method according to claim 2, **characterised in that** the polymer optical fibre includes an optical fibre made of fibres based on perfluoro polymer, or of fibres based on cyclic polyolefins, or based on poly(methyl methacrylate) (PMMA).

4. The method according to claim 1, **characterised in that** the end of the optical fibre being joined, with a higher melting temperature, is heated to a temperature higher by 50 to 250°C than the melting temperature of the optical fibre with a lower melting temperature.

5. The method according to claim 1, **characterised in that** the initial distance between the joined ends of the optical fibres being positive or negative and ranging from -20 to +50 µm.

6. The method according to claim 1, **characterised in that** the ends of the optical fibres being moved towards each other at a rate ranging from 10 to 50 µm/s.

7. The method according to claim 6, **characterised in that** the connecting ends being moved towards each other at a rate ranging from 20 to 40 µm/s.

8. The method according to claim 1, **characterised in that** the ends of the optical fibres being moved towards each other at a distance ranging from 10 to 100 µm.

9. Method for fusion splicing of optical fibres, involving arranging, aligning, axial positioning of the optical fibres towards each other, and then heating and connecting the opposite ends of the optical fibres being joined, **characterised in that** optical fibres of various material types with various melting temperatures being joined, where the end of the optical fibre being joined, with a higher melting temperature, is heated to a temperature above the melting temperature of the optical fibre with a lower melting temperature, at the same time lower than its own melting temperature, while the end of the optical fibre with a lower melting temperature is heated to a temperature close to, but not exceeding, its melting temperature; the optical fibre connecting ends, initially separated from each other by a strictly defined distance, are then moved towards each other at a strictly defined rate and at a strictly defined distance and pressed against each other until the fibres are thermally integrated.

10. The method according to claim 9, **characterised in that** the types of optical fibres being joined include glass optical fibre with a melting temperature in the range of 1800-2000°C, and polymer optical fibre with a melting temperature in the range of 100-400°C.

11. The method according to claim 10, **characterised in that** polymer optical fibre includes optical fibre made of fibres based on perfluoro polymer, or of fibres based on cyclic polyolefins, or based on poly(methyl methacrylate) (PMMA).

12. The method according to claim 9, **characterised in that** the end of the optical fibre being joined, with a higher melting temperature, is heated to a temperature higher by 50 to 250°C than the melting temperature of the optical fibre with a lower melting temperature.

13. The method according to claim 9, **characterised in that** the initial distance between the joined ends of the optical fibres being positive or negative and ranges from -20 to +50 µm.

14. The method according to claim 9, **characterised in that** the ends of the optical fibres being moved towards each other at a rate ranging from 10 to 50 µm/s.

15. The method according to claim 14, **characterised in that** the ends being moved towards each other at a rate ranging from 20 to 40 µm/s.

16. The method according to claim 9, **characterised in that** the ends of the optical fibres being moved towards each other at a distance ranging from 10 to 100 µm.
